# FASCICULE DE BREVET EUROPEEN

(11) **EP 2 076 369 B1**
(45) Date de publication et mention de la délivrance du brevet: **18.08.2010**
(21) Numéro de dépôt: 07858494.3
(22) Date de dépôt: 02.10.2007
(51) Int. Cl.: B29B 17/02

(54) **PROCÉDÉ DE RÉCUPÉRATION DE POLYPROPYLÈNE ET DE POLYÉTHYLÈNE NON CHARGÉS OU CHARGÉS A MOINS DE 20 %**
VERFAHREN ZUR RÜCKGEWINNUNG VON POLYPROPYLEN UND POLYETHYLEN, DIE NICHT GEFÜLLT SIND ODER DIE MIT WENIGER ALS 20% GEFÜLLT SIND
PROCESS FOR RECOVERING POLYPROPYLENE AND POLYETHYLENE THAT ARE NOT FILLED OR THAT ARE LESS THAN 20% FILLED

(30) Priorité: 05.10.2006 FR 0608771
(43) Date de publication de la demande: 08.07.2009
(73) Titulaire: Compagnie Plastic Omnium, 69007 Lyon (FR)
(72) Inventeur: VIOT, Frédéric, 01450 Poncin (FR)
(74) Mandataire: Remy, Vincent Noel Paul
(86) Numéro de dépôt international: PCT/FR2007/052061
(87) Numéro de publication internationale: WO 2008/040911

(56) Documents cités:
- DE-A1- 4 105 285
- DE-A1- 4 407 768
- DE-A1- 10 149 515
- GB-A- 2 078 138
- US-A- 4 162 880

## Description

La présente invention concerne un procédé de récupération de polypropylène 5et de polyéthylène non chargés ou chargés à moins de 20% dans un mélange de fragments de matériaux issu d'un résidu de broyage d'articles.

Elle s'applique plus particulièrement à un résidu de broyage de véhicules automobiles ou d'appareils électroménagers en fin de vie, globalement désignés « RBA ».

Le polyéthylène et le polypropylène se trouvent en relativement grande 10proportion dans les mélanges issus de RBA.

Le polypropylène est par exemple utilisé pour la fabrication des pare-chocs, des tableaux de bord ou encore de l'habillage de l'habitacle. Le polyéthylène est par exemple utilisé pour le revêtement de la carrosserie, pour la fabrication de films minces dans les vitrages, etc.

Le polypropylène et le polyéthylène sont des matériaux valorisables et il est particulièrement intéressant de les récupérer.

On connaît déjà dans l'état de la technique, notamment de GB 2 078 138 et DE 4407768, des procédés de récupération de polypropylène et de polyéthylène dans un mélange de matériaux issu d'un résidu de broyage d'articles.

Un procédé connu consiste à séparer par densité avec flottation, les différents fragments de matériaux, en augmentant ou diminuant progressivement la densité du milieu liquide dans lequel le mélange de matériaux est plongé.

Un tel procédé exige une grande précision pour établir la densité du milieu liquide. Par ailleurs, il est nécessaire de nettoyer soigneusement les fragments au préalable de manière que leur densité ne soit pas perturbée par des salissures et, surtout, que leur mouillabilité par le milieu liquide soit améliorée.

Par conséquent, un tel procédé s'avère être relativement coûteux à mettre en oeuvre.

L'invention a notamment pour but de fournir un procédé économique de 30récupération du polyéthylène et du polypropylène dans un mélange de fragments de matériaux issu d'un résidu de broyage d'articles.

A cet effet, l'invention a pour objet un procédé de récupération de polypropylène et de polyéthylène non chargés ou chargés à moins de 20% dans un mélange de fragments de matériaux obtenu directement par broyage à cisailles d'articles, 351e mélange comprenant au moins des fragments de matériaux polymères et de bois, **caractérisé en ce qu**'il comprend :
- une première étape de broyage des fragments du mélange réalisée au moyen d'un broyeur à marteaux, ce broyeur à marteaux étant agencé de manière à provoquer la cassure en grains des fragments du mélange en ménageant essentiellement les fragments de polyéthylène et de polypropylène, de manière qu'ils conservent des dimensions supérieures à un seuil prédéterminé,
- une deuxième étape de séparation par criblage pour extraire les fragments présentant des dimensions supérieures au seuil prédéterminé.

L'invention tire profit des propriétés mécaniques du polypropylène et du polyéthylène et notamment de leur relativement bonne résistance aux chocs en comparaison des autres matériaux présents dans le résidu de broyage.

Ainsi, la mise en oeuvre de ce procédé de récupération de polypropylène et de polyéthylène non chargés ou chargés à moins de 20% est relativement courte et efficace et ne nécessite ni de mettre en oeuvre un dispositif d'ajustement précis de la densité du milieu liquide ni de nettoyer les fragments en vue d'augmenter leur tension de surface.

Durant l'étape de broyage par le broyeur à marteaux, la résistance aux chocs à température ambiante du polypropylène et du polyéthylène permet à ces matériaux de ne pas être fractionnés en petits fragments comme c'est le cas pour les autres polymères tels que l'ABS, le polyamide, les alliages de polycarbonate, etc.

Dans un mode de mise en oeuvre particulier de l'invention, le broyeur à marteaux est agencé de manière que le seuil prédéterminé soit de 80 mm et la deuxième étape de séparation par criblage est réalisée au moyen d'un dispositif de criblage ayant une maille de 80 mm.

Les fragments qui ont les dimensions les plus grandes sont ainsi les fragments de polyéthylène et de polypropylène (dimensions généralement supérieures à 80 mm). Les fragments de polyéthylène et de polypropylène peuvent être alors facilement séparés lors de l'étape de criblage.

Les fragments de polyéthylène et de polypropylène du mélange obtenu à l'issue de ces première et deuxième étapes sont souvent souillés par des matériaux tels que du bois, des fragments de thermodurs avec leurs fibres de renfort, des mousses de polymères, etc.

Afin d'éliminer ces matériaux, de préférence, le procédé comprend encore :
- une troisième étape de densification de fragments de bois éventuellement extraits lors de la deuxième étape, dans un milieu liquide comprenant une solution basique, et
- une quatrième étape de séparation par densité avec flottation dans un milieu liquide de densité supérieure à une densité maximale du polypropylène et du polyéthylène non chargés ou chargés à moins de 20%, des fragments obtenus à l'issue de la troisième étape, de façon à éliminer les éventuels fragments de bois,
- une cinquième étape de séparation par ventilation des fragments obtenus à l'issue de la quatrième étape pour éliminer d'éventuels fragments de mousse de polymère.

Lors de la troisième étape, l'ajout d'une solution basique, par exemple, à base d'hydroxyde de sodium ou d'hydroxyde de potassium dans le milieu liquide va provoquer une hydrolyse du bois de manière à libérer les gaz retenus dans les fragments de bois et ainsi augmenter la densité de ces fragments. Ainsi, la densité de ces fragments de bois résiduels peut facilement atteindre une densité supérieure à 1 et donc supérieure à la densité du milieu liquide. Les fragments de bois tombent alors au fond de la cuve contenant le milieu liquide et les fragments surnageants sont alors facilement récupérés.

Par ailleurs, la densité maximale du polyéthylène et du polypropylène non chargés ou chargés à moins de 20% est toujours inférieure à 1, alors que la densité des autres polymères est en général toujours supérieure à 1, à l'exception des mousses de polymère qui, du fait de la présence d'alvéoles, sont moins denses.

On pourra alors choisir de préférence un milieu liquide de densité environ égale à 1 comprenant essentiellement de l'eau. De ce fait, la partie surnageante des fragments comprend essentiellement des fragments de polyéthylène et de polypropylène non chargés ou chargés à moins de 20%, l'autre partie comprenant des fragments d'autres polymères résiduels.

Selon d'autres caractéristiques optionnelles de l'invention, qui peuvent être prises seules ou en combinaison :
- La cinquième étape de séparation par ventilation est une étape de séparation par soufflage.
- La cinquième étape de séparation par ventilation est une étape de séparation par aspiration.
- Le milieu liquide de la troisième étape et le milieu liquide de la quatrième étape ont une densité supérieure à 1'.
- La solution basique est choisie parmi une solution à base d'hydroxyde de potassium et une solution à base d'hydroxyde de sodium.

L'invention sera mieux comprise à la lecture de la description qui va suivre, donnée uniquement à titre d'exemple et faite en se référant aux dessins dans lesquels :
- la figure 1 est une vue schématique d'une installation de récupération de fragments de polyoléfines pour la mise en oeuvre d'un procédé de récupération selon l'invention ;
- la figure 2 est une vue détaillée d'un broyeur à marteaux de l'installation de la figure 1 pour la mise en oeuvre d'une étape de broyage du procédé de récupération.

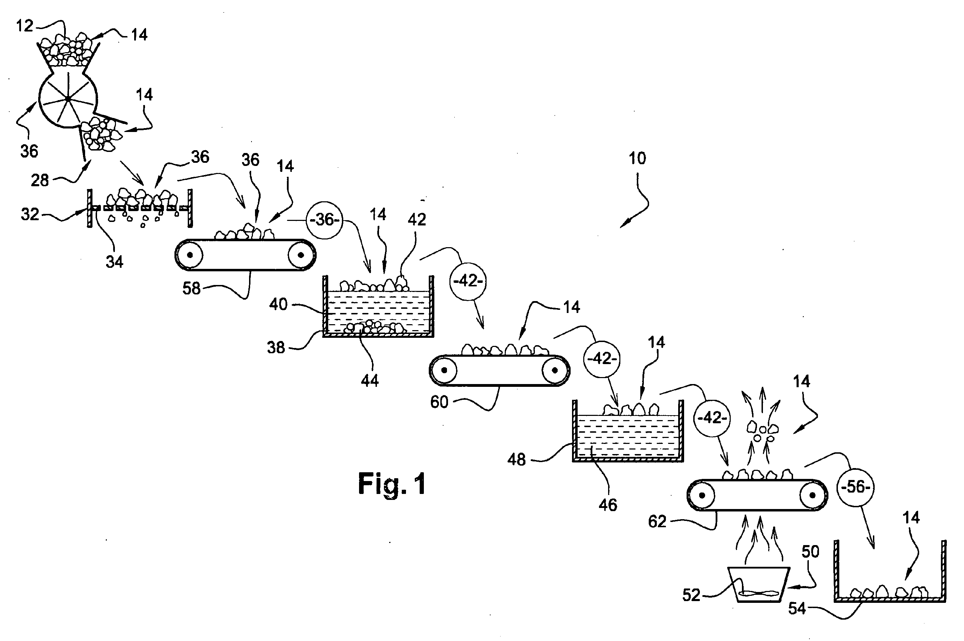

On a représenté sur la figure 1, une installation de récupération de polyéthylène et de polypropylène non chargés ou chargés à moins de 20%. L'installation est désignée par la référence générale 10.

L'installation 10 est destinée à récupérer des fragments de polyéthylène et de polypropylène non chargés ou chargés à moins de 20% dans un mélange 12 de fragments de matériaux provenant d'un résidu de broyage d'articles. Dans l'exemple décrit, le mélange de fragments de matériaux 12 provient d'un résidu de broyage d'un véhicule automobile.

De façon connue en soi, un résidu de broyage automobile est un mélange d'éléments broyés d'un véhicule automobile, une fois que la batterie, les pneus, le métal, ont été récupérés.

En général, le mélange de fragments de matériaux 12 comprend des fragments 14 de matériaux métalliques, de matériaux minéraux, de matériaux polymères et de bois.

Parmi, les fragments de matériaux polymères, on distingue notamment :
- Des fragments de mousse de polymères, par exemple des fragments de mousse de polyuréthane (densité environ entre 0,02 à 0,035) ;
- des fragments de polyéthylène et de polypropylène non chargés ou chargés à moins de 20%, notamment des fragments de polyéthylène (densité environ entre 0,92 et 0,95) et des fragments de polypropylène (densité égale à environ 0,9) ;
- des fragments de polyéthylène et de polypropylène chargés à plus de 20% (densité supérieure à 1) ;
- des fragments de polyamide, de polyester saturé, de polymétacrylate de méthyle, de polyester saturé, de polyester insaturé, de polyéthylène chargé, de caoutchouc, du plastique à base d'acrylonitrile butadiène-styrène (ABS), tous ces matériaux ayant des densités supérieures à 1.

Généralement, les fragments de bois ont une densité inférieure à 1 en raison de la structure du bois comprenant des espaces vides remplis de gaz.

Par ailleurs, le mélange 12 peut encore comprendre des fragments de matériaux métalliques tels que du cuivre, ce matériau ayant également une densité supérieure à 1.

Afin de séparer les fragments de polyéthylène et de polypropylène des autres fragments, l'installation 10 comprend un broyeur à marteaux 16.

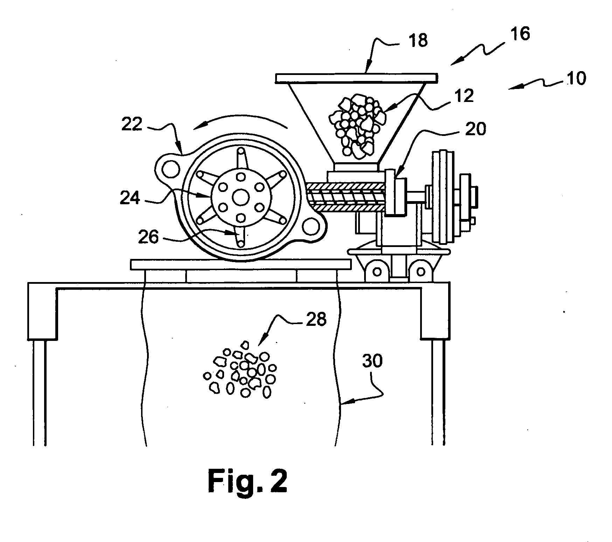

En référence à la figure 2, le broyeur à marteaux 16 comprend de façon classique une trémie 18 d'entrée destinée à alimenter le broyeur 16 avec un mélange de matériaux à broyer, dans cet exemple le mélange 12.

Le broyeur 16 comprend encore une vis 20 d'introduction dans un tambour 22.

Le tambour 22 comprend également un rotor 24 d'entraînement en rotation de cinq marteaux 26 destinés à frapper le mélange 12 introduit dans le tambour 22 afin d'obtenir un premier mélange 28 de grains de matériaux. Afin de récupérer le mélange 28, le broyeur à marteaux 16 comprend également un sac de récupération 30.

Conformément à l'invention, le broyeur à marteaux 16 est agencé de manière à ce que, dans les conditions normales de température et de pression, les fragments de polyéthylène et de polypropylène soient ménagés par le broyage tout en provoquant la cassure des fragments des autres matériaux sous l'impact des marteaux 16. A l'issue du broyage, l'essentiel des fragments de polypropylène et de polyéthylène a des dimensions supérieures à 80 mm tandis que les autres fragments ont des dimensions bien inférieures à 80 mm.

Afin de séparer les fragments de polyéthylène et de polypropylène du premier mélange 28, l'installation 10 comprend également un dispositif de criblage classique 32 destiné au criblage du premier mélange 28 de matériau broyé récupéré dans le sac 30.

De préférence, le dispositif de criblage 32 comprend un tamis 34 dont la maille a un motif élémentaire de dimension égale à 80 mm de manière à récupérer un deuxième mélange 36, comprenant essentiellement les fragments de polyéthylène et de polypropylène de dimensions supérieures à 80mm, et éliminer des fragments résiduels de dimensions inférieures à 80 mm.

Le deuxième mélange 36 comprend éventuellement des fragments de bois et de polymères résiduels.

Afin d'éliminer les fragments résiduels de bois du deuxième mélange 36 par densification, l'installation 10 comprend un premier récipient 38 contenant un milieu liquide 40 comprenant une solution basique.

Ce milieu liquide 40 comprend de l'eau et une solution basique pour le trempage du deuxième mélange 36 dans ce milieu liquide 40. De préférence, la solution basique est choisie parmi une solution à base d'hydroxyde de potassium et une solution à base d'hydroxyde de sodium.

Cette solution basique est destinée notamment à densifier le bois par hydrolyse. De façon connue en soi, l'hydrolyse du bois permet de déstructurer la matière et de libérer les gaz retenus dans la structure du bois.

Le récipient 38 contenant le liquide 40 permet la séparation d'une partie surnageante formant un troisième mélange 42 d'une partie 44, qui coule, contenant les fragments de bois densifiés ainsi que d'autres fragments de matériaux lourds résiduels tels que par exemple les polyéthylène et polypropylène chargés à plus de 20%.

L'installation 10 comprend également un deuxième récipient 46 contenant un milieu liquide 48, pour le nettoyage des fragments du troisième mélange 42 obtenu précédemment. Ainsi, on choisira de préférence de l'eau.

Par ailleurs, afin d'éliminer les fragments de mousse et récupérer les fragments de polyéthylène et de polypropylène non chargés ou chargés à moins de 20% dans le troisième mélange 42, l'installation 10 comprend encore des moyens 50 de séparation par ventilation classique.

Les moyens de séparation par ventilation 50 comprennent des ventilateurs 52. En variante, les moyens de séparation 50 par ventilation pourraient comprendre des moyens d'aspiration.

L'installation 10 comprend encore un troisième 54 récipient de récupération du quatrième mélange 56 comprenant au moins les fragments de polyéthylène et de polypropylène non chargés ou chargés à moins de 20% et dans lequel les fragments de mousse ont été éliminés.

Afin d'acheminer les fragments du mélange 12 dans les trois récipients, l'installation 10 comprend également :
- un tapis roulant 58 amont destiné à acheminer le deuxième mélange 36 dans le premier récipient,
- un tapis roulant 60 intermédiaire destiné à acheminer le troisième mélange 42 vers le deuxième récipient 46, et
- un tapis roulant 62 aval destiné à acheminer le quatrième mélange 56 dans le troisième récipient 54.

En particulier, le tapis roulant aval 62 comporte par exemple une grille dont la dimension des mailles est inférieure à la dimension des fragments de polyéthylène et de polypropylène non chargés ou chargés à moins de 20%, le tapis roulant 62 étant disposé au-dessus des ventilateurs 52 qui envoient un flux d'air à travers la grille.

On va maintenant décrire les principaux aspects du déroulement d'un procédé de récupération de polyoléfines et plus particulièrement de polyéthylène et de polypropylène.

Le procédé comprend une première étape de broyage à l'aide du broyeur à marteaux 16.

Ainsi, le mélange 12 est versé dans la trémie 18, puis introduit par la vis d'introduction 20 dans le tambour 22.

L'impact sur le mélange 12 des marteaux 26 va provoquer la cassure des fragments du mélange 12 en épargnant essentiellement les fragments de polypropylène et de polyéthylène qui vont conserver sensiblement leurs dimensions initiales à température ambiante.

On récupère alors un premier mélange broyé 28 comprenant des fragments de polyéthylène et de polypropylène de dimensions supérieures à 80 mm et des grains de matériaux de dimensions inférieures à 80 mm dans le sac de récupération 30.

Ensuite, au cours d'une deuxième étape, on sépare les fragments de polyéthylène et de polypropylène par criblage pour extraire du premier mélange 28 broyé obtenu à l'issue de la première étape, un deuxième mélange 36 comprenant essentiellement les fragments épargnés de polyéthylène et de polypropylène de dimensions supérieures à 80 mm.

Puis, au cours d'une troisième étape, on densifie les fragments de bois résiduels par trempage du deuxième mélange 36 obtenu à l'issue de la deuxième étape, dans le milieu liquide 40 du premier récipient 38 de façon à ce que les fragments de bois aient une densité supérieure à 1.

On sépare alors, au cours d'une quatrième étape, par densité avec flottation dans le milieu liquide 40 du deuxième récipient 38, une partie comprenant les fragments de bois et les fragments de polymère résiduels lourds tels que les fragments de cuivre, de polymères lourds, d'ABS, etc. qui coule et une partie comprenant les fragments de polyéthylène et polypropylène ainsi que des fragments de mousse de polymères qui surnage. La partie surnageante forme le troisième mélange 42.

On extrait le troisième mélange 42 à l'aide de moyens classiques et le tapis roulant intermédiaire 60 achemine ce troisième mélange 42 vers le deuxième récipient 46.

Dans le deuxième récipient 46 contenant de l'eau 48, les fragments du troisième mélange 42 sont nettoyés.

Au cours de l'acheminement par le tapis roulant aval 62, au cours d'une cinquième étape, on sépare par ventilation le troisième mélange 42 obtenu lors de la quatrième étape, ceci afin d'éliminer les fragments de mousse de polymères légers et récupérer un quatrième mélange 56 des fragments de polyéthylène et polypropylène non chargés ou chargés à moins de 20%.

De préférence, la cinquième étape de séparation par ventilation est une étape de séparation par soufflage. En variante, la cinquième étape de séparation par ventilation est une étape de séparation par aspiration.

On récupère le quatrième mélange 56 ainsi obtenu, comprenant les fragments de polyéthylène et polypropylène purs dans le troisième récipient 54.

Ce procédé permet donc de récupérer le polyéthylène et le polypropylène non chargés ou chargés à moins de 20% sans recourir à des moyens complexes et coûteux.

Il est bien entendu que le mode de réalisation qui vient d'être décrit ne présente aucun caractère limitatif.

## Revendications

1. Procédé de récupération de polypropylène et de polyéthylène non chargés ou chargés à moins de 20% dans un mélange (12) de fragments (14) de matériaux obtenu directement par broyage à cisailles d'articles, le mélange (12) comprenant au moins des fragments (14) de matériaux polymères et de bois, **caractérisé en ce qu'**il comprend :
- une première étape de broyage des fragments du mélange (12) réalisée au moyen d'un broyeur à marteaux (16), ce broyeur à marteaux (16) étant agencé de manière à provoquer la cassure en grains des fragments du mélange (12) en ménageant essentiellement les fragments de polyéthylène et de polypropylène, de manière que les fragments de polyéthylène et de polypropylène conservent des dimensions supérieures à un seuil prédéterminé,
- une deuxième étape de séparation par criblage pour extraire les fragments présentant des dimenεions supérieures au seuil prédéterminé en vue de leur récupération et pour éliminer les fragments présentant des dimensions inférieures au seuil prédéterminé.

2. Procédé de récupération selon la revendication 1, comprenant encore :
- une troisième étape de densification de fragments (14) de bois éventuellement extraits lors de la deuxième étape, dans un milieu liquide (40) comprenant une solution basique, et
- une quatrième étape de séparation par densité avec flottation dans un milieu liquide (40) de densité supérieure à une densité maximale du polypropylène et du polyéthylène non chargés ou chargés à moins de 20%, des fragments obtenus à l'issue de la troisième étape, de façon à éliminer les éventuels fragments de bois,
- une cinquième étape de séparation par ventilation des fragments obtenus à l'issue de la quatrième étape pour éliminer d'éventuels fragments (14) de mousse de polymère.

3. Procédé de récupération selon la revendication 1 ou 2, dans lequel le broyeur à marteaux (16) est agencé de manière que le seuil prédéterminé soit de 80 mm et dans lequel la deuxième étape de séparation par criblage est réalisée au moyen d'un dispositif de criblage ayant une maille de 80 mm.

4. Procédé de récupération selon la revendication 2 ou 3, dans lequel la cinquième étape de séparation par ventilation est une étape de séparation par soufflage.

5. Procédé de récupération selon l'une quelconque des revendications 2 à 4, dans lequel la cinquième étape de séparation par ventilation est une étape de séparation par aspiration.

6. Procédé de récupération selon l'une quelconque des revendications 2 à 5, dans lequel le milieu liquide (40) de la troisième étape et le milieu liquide (48) de la quatrième étape ont une densité supérieure à 1.

7. Procédé de récupération selon l'une quelconque des revendications 2 à 6, dans lequel la solution basique est choisie parmi une solution à base d'hydroxyde de potassium et une solution à base d'hydroxyde de sodium.

## Claims

1. A method of recovering polypropylene and polyethylene that are not filled or that are filled to less than 20% in a mixture (12) of fragments (14) of material obtained directly by shear milling articles, the mixture (12) comprising at least fragments (14) of polymer materials and of wood, the method being **characterized in that** it comprises:
· a first step of milling the fragments of the mixture (12) performed by means of a hammermill (16), the hammermill (16) being arranged in such a manner as to cause the fragments of the mixture (12) to be broken into grains, while sparing the fragments of polyethylene and of polyprolylene essentially in such a manner that the fragments of polyethylene and of polyprolylene conserve dimensions that are greater than a predetermined threshold; and
a second step of separation by screening to extract fragments presenting dimensions greater than the predetermined threshold in order to recover them, and to eliminate fragments presenting dimensions that are smaller than the predetermined threshold.

2. A recovery method according to claim 1, further comprising:
· a third step of densifying the wood fragments (14) extracted during the second step, if any, in a liquid medium (40) comprising a basic solution;
· a fourth step of density separation of the fragments obtained from the third step by floating in a liquid medium (40) of density greater than a maximum density of polyprolylene or of polyethylene that are not filled or that are filled to less than 20%, in order to eliminate the wood fragments, if any; and
· a fifth step of ventilation separation performed on the fragments obtained at the end of the fourth step in order to eliminate fragments (14) of polymer foam, if any.

3. A recovery method according to claim 1 or claim 2, wherein the hammermill (16) is arranged in such a manner that the predetermined threshold is 80 mm, and wherein the second step of separation by screening is performed by means of a screening device having a mesh of 80 mm.

4. A recovery method according to claim 2 or claim 3, wherein the fifth step of ventilation separation is a blower separation step.

5. A recovery method according to any one of claims 2 to 4, wherein the fifth step of ventilation separation is a suction separation step.

6. A recovery method according to any one of claims 2 to 5, wherein the liquid medium (40) of the third step and the liquid medium (48) of the fourth step have respective relative densities greater than 1.

7. A recovery method according to any one of claims 2 to 6, wherein the basic solution is selected from a solution based on potassium hydroxide and from a solution based on sodium hydroxide.

## Patentansprüche

1. Verfahren zur Rückgewinnung von Polypropylen und von Polyethylen, die nicht gefüllt sind oder die mit weniger als 20 % gefüllt sind, in einem Gemisch (12) aus Fragmenten (14) von Materialien, die direkt durch Schneidmahlen von Gegenständen erhalten wurden, wobei das Gemisch (12) mindestens Fragmente (14) von Polymermaterialien und Holz aufweist, **dadurch gekennzeichnet, dass** es umfasst:
- einen ersten Schritt des Zermahlens der Fragmente des Gemischs (12), der mittels einer Hammermühle (16) ausgeführt wird, wobei diese Hammermühle (16) gestaltet ist, um das Brechen der Fragmente des Gemischs (12) in Körnchen zu bewirken, wobei die Polyethylen- und Polypropylenfragmente im Wesentlichen derart schonend behandelt werden, dass die Polyethylen- und Polypropylenfragmente Dimensionen behalten, die größer sind als ein zuvor festgelegter Schwellenwert,
- einen zweiten Schritt des Trennens durch Sieben, um die Fragmente zu extrahieren, die Dimensionen aufweisen, die größer sind als der vorher festgelegte Schwellenwert, um sie zurückzugewinnen und um die Fragmente zu entfernen, die Dimensionen aufweisen, die kleiner sind als der zuvor festgelegte Schwellenwert.

2. Verfahren zur Rückgewinnung nach Anspruch 1, ferner umfassend:
- einen dritten Schritt des Verdichten der Holzfragmente (14), die im zweiten Schritt gegebenenfalls extrahiert wurden, in einem flüssigen Medium (40), das eine basische Lösung aufweist, und
- einen vierten Schritt zum Trennen über die Dichte mit Flotation in einem flüssigen Medium (40) mit einer Dichte, die größer ist als eine maximale Dichte des Polypropylens und des Polyethylens, das nicht gefüllt ist oder das mit weniger als 20 % gefüllt ist, der Fragmente, die am Ende des dritten Schritts erhalten wurden, um die gegebenenfalls vorhandenen Holzfragmente zu entfernen,
- einen fünften Schritt zum Trennen durch Ventilation der Fragmente, die am Ende des vierten Schritts erhalten wurden, um die gegebenenfalls vorhandenen Polymerschaumfragmente (14) zu entfernen.

3. Verfahren zur Rückgewinnung nach Anspruch 1 oder 2, wobei die Hammermühle (16) derart gestaltet ist, dass der zuvor festgelegte Schwellenwert 80 mm ist und wobei der zweite Schritt zur Trennung durch Sieben mittels einer Siebvorrichtung mit einer Sieböffnung von 80 mm ausgeführt wird.

4. Verfahren zur Rückgewinnung nach Anspruch 2 oder 3, wobei der fünfte Schritt zum Trennen durch Ventilation ein Schritt zum Trennen durch Blasen ist.

5. Verfahren zur Rückgewinnung nach irgendeinem der Ansprüche 2 bis 4, wobei der fünfte Schritt zum Trennen durch Ventilation ein Schritt zum Trennen durch Saugen ist.

6. Verfahren zur Rückgewinnung nach irgendeinem der Ansprüche 2 bis 5, wobei das flüssige Medium (40) des dritten Schritts und das flüssige Medium (48) des vierten Schritts eine Dichte haben, die größer als 1 ist.

7. Verfahren zur Rückgewinnung nach irgendeinem der Ansprüche 2 bis 6, wobei die basische Lösung aus einer Lösung auf der Basis von Kaliumhydroxid und einer Lösung auf der Basis von Natriumhydroxid ausgewählt ist.
